# EUROPEAN PATENT SPECIFICATION

(11) **EP 3 171 093 B1**
(45) Date of publication and mention of the grant of the patent: **17.04.2019**
(21) Application number: 14897615.2
(22) Date of filing: 11.11.2014
(51) Int. Cl.: F24H 1/18, F24H 4/04, F24D 3/18, F24D 3/08, F24D 19/08

(54) **STORAGE-TYPE HOT WATER SUPPLY SYSTEM**
HEISSWASSERVERSORGUNGSSYSTEM VOM SPEICHERTYP
SYSTÈME D'ALIMENTATION EN EAU CHAUDE DU TYPE RÉSERVOIR

(30) Priority: 17.07.2014 JP 2014146833
(43) Date of publication of application: 24.05.2017
(73) Proprietor: Mitsubishi Electric Corporation, Chiyoda-ku Tokyo 100-8310 (JP)
(72) Inventor: IIDA, Kyohei, Tokyo 100-8310 (JP); SAKUMA, Toshiyuki, Tokyo 100-8310 (JP); KAZAMA, Shirou, Tokyo 100-8310 (JP); HIRAMOTO, Tatsuichi, Tokyo 100-8310 (JP)
(74) Representative: Pfenning, Meinig & Partner mbB
(86) International application number: PCT/JP2014/079802
(87) International publication number: WO 2016/009574

(56) References cited:
- EP-A2- 2 151 633
- GB-A- 1 238 713
- JP-A- 2001 173 967
- JP-A- 2012 237 492
- JP-A- 2014 005 995
- JP-A- 2014 005 995
- JP-A- 2014 016 077
- JP-A- 2014 016 077

## Description

### Technical Field

The present invention relates to a storage-type hot water supply system.

### Background Art

Some of conventional storage-type hot water supply systems include, for example, a storage tank for storing fluid (e.g., city water or city water containing antifreeze) used to supply hot water, a first forward path through which the fluid stored in the storage tank is led to a refrigerant heat exchanger in a heat pump unit (HPU) serving as heat source, a first return path through which the fluid led to the refrigerant heat exchanger is led to the storage tank, a pump provided in the first forward path, a flow switching device located at a position halfway of the first return path, a second forward path having one end portion communicating with flow switching device and the other end portion communicating with an air heat exchanger serving as a heat supply unit, and a second return path having one end portion communicating with the air heat exchanger and the other end portion communicating with the storage tank of the first forward path. The storage tank, the first forward path, the refrigerant heat exchanger, and the first return path constitute a heat storage circuit. The second forward path, the air heat exchanger, and the second return path constitute a heat supply path (see, for example, Patent Literature 1).

Patent Literature 2 discloses a system according to the preamble of independent claim 1.

Patent Literature 2 discloses a hot water storage type hot water supply apparatus including control means which for sending heat source water to a use side heat exchanger to heat an object is selecting in accordance with a predetermined rule any one of three heat source water circulation operations.

In Patent Literature 3 a of water circulation system associated with a heat pump is described in which heating or hot water supply can be performed smoothly in the indoor unit even when an outdoor unit performs a defrosting operation.

Patent Literature 4 discloses a heating installation which minimizes corrosion in pipework.

Patent Literature 5 relates to a thermal apparatus comprising a heat pump unit, a tank unit and a gas heat source which is capable to implement a tank boiling-up operation even when a hot water supply set temperature cannot be acquired from a remote controller.

### Citation List

### Patent Literature

Patent Literature 1: International Publication No. 2011/040387 (Fig. 1, etc.)
Patent Literature 2: JP 2014/016077 A
Patent Literature 3: EP 21 51 633 A2
Patent Literature 4: GB 1 238 713 A
Patent Literature 5: JP 2014 005 995 A

### Summary of Invention

### Technical Problem

In the conventional storage-type hot water supply system, an air release mechanism, for discharging air remaining in a pipe at an initial stage of installation and gas dissolved in the fluid heated by the refrigerant heat exchanger, has to be provided in each of the heat storage circuit and the heat supply path, which leads to an increase in number of air release mechanisms, hence in cost of the parts. In addition, although the number of air release mechanisms can be reduced by incorporating a vent path having one end portion communicating with the heat storage circuit and the other end portion communicating with the heat supply path and locating the air release mechanism in the vent path, the fluid in the heat storage circuit and the fluid in the heat supply path are mixed upon performing predetermined operations. Thus, with the conventional storage-type hot water supply system it is difficult to reduce the parts cost while preventing mixture of the fluid in the heat storage circuit and the fluid in the heat supply path.

The present invention has been accomplished in view of the foregoing problem, and provides a storage-type hot water supply system that facilitates reduction in parts cost while preventing mixture of fluid in a heat storage circuit and fluid in a heat supply path.

### Solution to Problem

In one embodiment, the present invention provides a storage-type hot water supply system including: a storage tank configured to store fluid for use in supplying hot water; a heat source configured to heat the fluid; a first forward path through which the fluid stored in the storage tank is led to the heat source; a first return path through which the fluid led to the heat source is led to the storage tank; a pump provided in the first forward path; a flow switching device provided in the first return path; a second forward path having one end portion communicating with the flow switching device and an other end portion communicating with a heat supply unit; a second return path having one end portion communicating with the heat supply unit and an other end portion communicating with a point between the storage tank and the pump; an air release mechanism configured to discharge gas contained in the fluid flowing through the first return path and the second return path; a first vent path having one end portion communicating with a point between the flow switching device and the storage tank, and an other end portion communicating with an inlet of the air release mechanism; a second vent path having one end portion communicating with the second forward path and an other end portion communicating with the inlet of the air release mechanism; and a first check valve provided to the first vent path and configured to permit the fluid to flow toward the inlet of the air release mechanism and prevent a reverse flow of the fluid.

In another embodiment, the present invention provides a storage-type hot water supply system including a storage tank for storing fluid for use in supplying hot water, a heat source that heats the fluid, a first forward path through which the fluid stored in the storage tank is led to the heat source, a first return path through which the fluid led to the heat source is led to the storage tank, a pump provided in the first forward path, a flow switching device located at a position halfway of the first return path, a second forward path having one end portion communicating with the flow switching device and an other end portion communicating with the heat supply unit, a second return path having one end portion communicating with the heat supply unit and an other end portion communicating with a point in the first forward path between the storage tank and the pump, an air release mechanism that discharges gas contained in the fluid flowing through the first return path and the second return path, a first vent path having one end portion communicating with a point in the first return path between the flow switching device and the storage tank, and an other end portion communicating with an inlet of the air release mechanism, and a second vent path having one end portion communicating with the second forward path and an other end portion communicating with the inlet of the air release mechanism. Pressure loss in the second vent path is larger than pressure loss in a flow path from a junction with the first vent path to a junction between the first forward path and the second return path, through the storage tank.

### Advantageous Effects of Invention

In the storage-type hot water supply system according to one embodiment of the present invention, the other end portion of the first vent path, having the one end portion communicating with the point between the flow switching device in the first return path and the storage tank, and the other end portion of the second vent path, having the one end portion communicating with the second forward path, both communicate with the same inlet of the air release mechanism. In other words, the air release mechanism is included in the vent path having the one end portion communicating with the heat storage circuit and the other end portion communicating with the heat supply path. Accordingly, the number of air release mechanisms can be reduced. In addition, the first check valve that only permits a flow toward the inlet of the air release mechanism is provided to the first vent path. Therefore, the fluid is restricted from flowing into the heat storage circuit from the heat supply path through the vent path, and consequently the fluid in the heat storage circuit and the fluid in the heat supply path can be prevented from being mixed with each other.

In the storage-type hot water supply system according to another embodiment of the present invention, the other end portion of the first vent path, having the one end portion communicating with the point between the flow switching device in the first return path and the storage tank, and the other end portion of the second vent path, having the one end portion communicating with the second forward path, both communicate with the same inlet of the air release mechanism. In other words, the air release mechanism is included in the vent path having the one end portion communicating with the heat storage circuit and the other end portion communicating with the heat supply path. Accordingly, the number of air release mechanisms can be reduced. In addition, the pressure loss in the second vent path is larger than the pressure loss in the flow path formed from the junction between the first return path and the first vent path to the junction between the first forward path and the second return path, through the storage tank. Therefore, the fluid is restricted from flowing into the heat supply path from the heat storage circuit through the vent path, and consequently the fluid in the heat storage circuit and the fluid in the heat supply path can be prevented from being mixed with each other.

### Brief Description of Drawings

Fig. 1 is a schematic diagram for explaining a configuration of a storage-type hot water supply system according to Embodiment 1 of the present invention.
Fig. 2 is a schematic diagram for explaining a hot water supply operation of the storage-type hot water supply system according to Embodiment 1 of the present invention.
Fig. 3 is a schematic diagram for explaining a heat storage operation of the storage-type hot water supply system according to Embodiment 1 of the present invention.
Fig. 4 is a schematic diagram for explaining a heat supply operation of the storage-type hot water supply system according to Embodiment 1 of the present invention.
Fig. 5 is a schematic diagram for explaining a configuration of a storage-type hot water supply system according to Embodiment 2 of the present invention.
Fig. 6 is a schematic diagram for explaining a heat storage operation of the storage-type hot water supply system according to Embodiment 2 of the present invention.
Fig. 7 is a schematic diagram for explaining a heat supply operation of the storage-type hot water supply system according to Embodiment 2 of the present invention.
Fig. 8 is a schematic diagram for explaining a configuration of a storage-type hot water supply system according to Embodiment 3 of the present invention.
Fig. 9 is a schematic diagram for explaining a heat storage operation of the storage-type hot water supply system according to Embodiment 3 of the present invention.
Fig. 10 is a schematic diagram for explaining a heat supply operation of the storage-type hot water supply system according to Embodiment 3 of the present invention.
Fig. 11 is a schematic diagram for explaining a configuration of a storage-type hot water supply system according to Embodiment 4 of the present invention.
Fig. 12 is a schematic diagram for explaining a heat storage operation of the storage-type hot water supply system according to Embodiment 4 of the present invention.
Fig. 13 is a schematic diagram for explaining a heat supply operation of the storage-type hot water supply system according to Embodiment 4 of the present invention.

### Description of Embodiments

Hereafter, a storage-type hot water supply system according to some embodiments of the present invention will be described with reference to the drawings. It is to be noted that the configurations and operations described hereunder are merely exemplary, and the present invention is in no way limited to the configurations and operations described below. In all the drawings, same elements or portions are given the same numeral. Minor details of the configuration may be simplified or omitted, as the case may be. Descriptions of the same or similar configurations may be simplified or omitted, as the case may be.

### Embodiment 1

A storage-type hot water supply system according to Embodiment 1 will be described hereunder.

### < Configuration of Storage-Type Hot Water Supply System >

A configuration of the storage-type hot water supply system according to Embodiment 1 will be described hereunder.

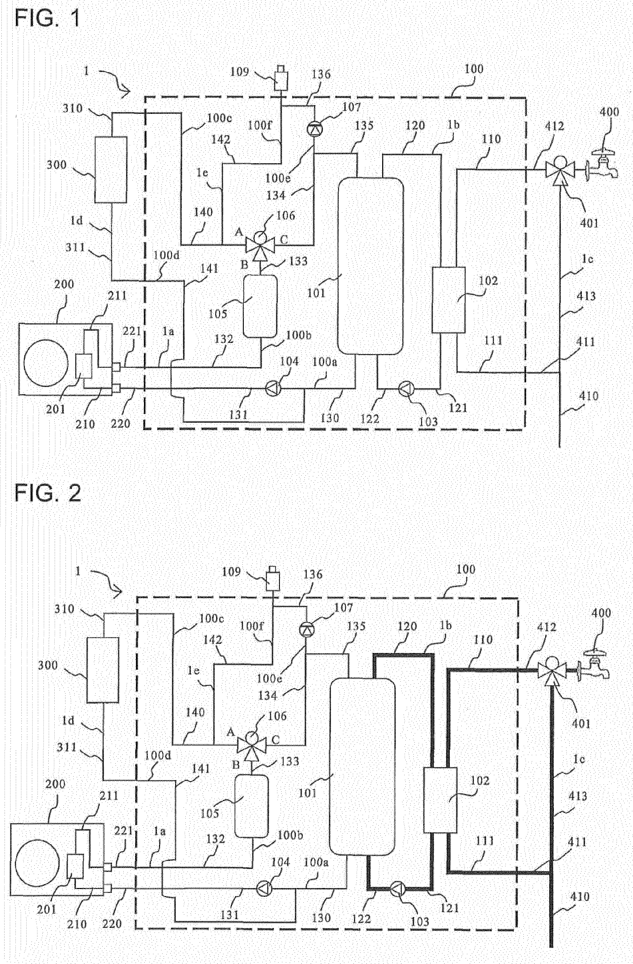

Fig. 1 is a schematic diagram for explaining the configuration of the storage-type hot water supply system according to Embodiment 1 of the present invention. As shown in Fig. 1, the storage-type hot water supply system 1 includes a storage unit 100 connected to a heat pump unit (hereinafter abbreviated as HPU) 200, a heat supply unit 300 such as an air-conditioning apparatus or a floor heater, and a hot water outlet 400.

The storage unit 100 includes a storage tank 101 in which fluid (e.g., city water or city water containing antifreeze) is stored, a heat storage circuit circulation pump 104, a heater 105, and a flow switching device 106. The HPU 200 includes a heat source 201 to which refrigerant having exchanged heat with outside air after being expanded is supplied in a compressed state. Although in Embodiment 1 the heat source 201 is constituted of a refrigerant heat exchanger provided in a refrigeration cycle in the heat pump unit 200, the heat source 201 may be any device capable of heating the fluid, such as an electric heater. The storage tank 101, the heat storage circuit circulation pump 104, the heat source (refrigerant heat exchanger) 201, the heater 105, and the flow switching device 106 are connected via a pipe, so as to constitute a heat storage circuit 1a. In Embodiment 1 the flow switching device 106 is a three-way valve, a flow switching device of an other type may be adopted.

The storage-type hot water supply system 1 includes a first forward path 100a through which the fluid stored in the storage tank 101 is led to the heat source 201, and a first return path 100b through which the fluid led to the heat source 201 is led to the storage tank 101. The first forward path 100a includes, for example, a first HPU forward pipe 130 and a second HPU forward pipe 131. The first return path 100b includes, for example, a first HPU return pipe 132, the heater 105, a second HPU return pipe 133, a third HPU return pipe 134, and a fourth HPU return pipe 135. The heat storage circuit circulation pump 104 is located at a position halfway of the first forward path 100a, and the heater 105 and the flow switching device 106 are connected to a halfway position of the first return path 100b.

More specifically, a lower portion of the storage tank 101 and the heat storage circuit circulation pump 104 are connected to each other via the first HPU forward pipe 130. The heat storage circuit circulation pump 104 and an inlet of the heat source (refrigerant heat exchanger) 201 are connected to each other via the second HPU forward pipe 131, an HPU external forward pipe 220, and an HPU internal forward pipe 210. An outlet of the heat source (refrigerant heat exchanger) 201 and a lower portion of the heater 105 are connected to each other via an HPU internal return pipe 211, an HPU external return pipe 221, and the first HPU return pipe 132. An upper portion of the heater 105 and a B port (inlet) of the flow switching device 106 are connected to each other via the second HPU return pipe 133. Further, a C port (first outlet) of the flow switching device 106 and an upper portion of the storage tank 101 are connected to each other via the third HPU return pipe 134 and the fourth HPU return pipe 135.

The storage unit 100 also includes a water heat exchanger 102 and an indirect hot water supply circuit circulation pump 103. The storage tank 101, the water heat exchanger 102, and the indirect hot water supply circuit circulation pump 103 are connected via a pipe, so as to constitute an indirect hot water supply circuit 1b.

More specifically, the upper portion of the storage tank 101 and an inlet of the water heat exchanger 102 are connected to each other via an indirect hot water supply forward pipe 120. An outlet of the water heat exchanger 102 and the indirect hot water supply circuit circulation pump 103 are connected to each other via a first indirect hot water supply return pipe 121. In addition, the indirect hot water supply circuit circulation pump 103 and the lower portion of the storage tank 101 are connected to each other via a second indirect hot water supply return pipe 122.

A hot water supply path 1c is connected to the water heat exchanger 102. In the water heat exchanger 102, heat is exchanged between the fluid circulating in the indirect hot water supply circuit 1b and the water (e.g., city water) flowing through the hot water supply path 1c. The water which has turned into hot water through the heat exchange is led to the hot water outlet 400.

More specifically, the hot water supply path 1c includes branched sections of an external water supply pipe 410, namely an external hot water supply forward pipe 411 and an external water supply branch pipe 413. The external hot water supply forward pipe 411 is connected to the inlet of the water heat exchanger 102 via a hot water supply forward pipe 111. In addition, the external water supply branch pipe 413 and an external hot water supply return pipe 412 connected to the outlet of the water heat exchanger 102 via a hot water supply return pipe 110 are connected to the hot water outlet 400 via a mixing valve 401.

Further, a path communicating between an A port (second outlet) of the flow switching device 106 and a halfway position of the first HPU forward pipe 130, in other words a position between the storage tank 101 and the heat storage circuit circulation pump 104, constitutes a heat supply path 1d. The heat supply path 1d includes the heat supply unit 300.

More specifically, the A port (second outlet) of the flow switching device 106 and an inlet of the heat supply unit 300 are connected to each other via a heat supply forward pipe 140 and an external heat supply forward pipe 310. In addition, an outlet of the heat supply unit 300 and the halfway position of the first HPU forward pipe 130 are connected to each other via an external heat supply return pipe 311 and a heat supply return pipe 141.

Thus, the storage-type hot water supply system 1 includes a second forward path 100c having one end portion communicating with the flow switching device 106 and the other end portion communicating with the heat supply unit 300, and a second return path 100d having one end portion communicating with the heat supply unit 300 and the other end portion communicating with a point between the storage tank 101 of the first forward path 100a and the heat storage circuit circulation pump 104.

Further, a point in the heat storage circuit 1a between the C port (first outlet) of the flow switching device 106 and the storage tank 101, and a point in the heat supply path 1d between the A port (second outlet) of the flow switching device 106 and the heat supply unit 300 both communicate with an inlet of an air release mechanism 109. The air release mechanism 109 serves to discharge gas contained in the fluid flowing through the first return path 100b and the second return path 100d, and is constituted of, for example, an air release valve.

More specifically, the junction between the third HPU return pipe 134 and the fourth HPU return pipe 135 is connected to the inlet of the air release mechanism 109 via a first vent pipe 136. The heat supply forward pipe 140 is connected to the inlet of the air release mechanism 109 via a second vent pipe 142. A first check valve 107 is provided to the first vent pipe 136. The first check valve 107 permits the fluid to flow from the junction between the third HPU return pipe 134 and the fourth HPU return pipe 135 toward the inlet of the air release mechanism 109 and prevent the reverse flow of the fluid.

Thus, the storage-type hot water supply system 1 also includes a first vent path 100e having one end portion communicating with the point between the flow switching device 106 in the first return path 100b and the storage tank 101, and the other end portion communicating with the inlet of the air release mechanism 109, and a second vent path 100f having one end portion communicating with the second forward path 100c and the other end portion communicating with the inlet of the air release mechanism 109. In other words, a vent path 1e, having one end portion communicating with the heat storage circuit 1a and the other end portion communicating with the heat supply path 1d, is formed.

The fourth HPU return pipe 135 and the first vent pipe 136 extend upward from a lower side, in the gravity direction. Accordingly, the first check valve 107 only permits a flow directed upward from a lower side in the gravity direction. The first check valve 107 is located at an upper position with respect to the storage tank 101 in the gravity direction. The inlet of the air release mechanism 109 is located at an upper position with respect to the first check valve 107.

In addition, a difference in elevation between the first check valve 107 and the junction between the first vent pipe 136 and the fourth HPU return pipe 135 is determined such that buoyancy acting on air that has floated up to the first check valve 107 through the fourth HPU return pipe 135 exceeds spring pressure of the first check valve 107.

### < Operation of Storage-Type Hot Water Supply System >

An operation of the storage-type hot water supply system according to Embodiment 1 will be described hereunder. The storage-type hot water supply system 1 is configured to perform at least a hot water supply operation, a heat storage operation, and a heat supply operation.

### (Hot Water Supply Operation)

Fig. 2 is a schematic diagram for explaining the hot water supply operation of the storage-type hot water supply system according to Embodiment 1 of the present invention. Referring to Fig. 2, in the hot water supply operation the indirect hot water supply circuit circulation pump 103 is activated, and the fluid circulating in the indirect hot water supply circuit 1b (e.g., city water or city water containing antifreeze) and water flowing through the hot water supply path 1c (e.g., city water) exchange heat with each other in the water heat exchanger 102. The water which has undergone the heat exchange turns into hot water, and is supplied to the hot water outlet 400. Thus, the storage tank 101 serves to store the fluid (e.g., city water or city water containing antifreeze) used for the hot water supply.

More specifically, the fluid stored in the storage tank 101 flows out from the upper portion thereof and flows into the water heat exchanger 102 through the indirect hot water supply forward pipe 120 and, after the heat exchange, sequentially passes through the first indirect hot water supply return pipe 121 and the second indirect hot water supply return pipe 122 thereby returning to the lower portion of the storage tank 101. In addition, the water flowing through the external water supply pipe 410 sequentially passes through the external hot water supply forward pipe 411 and the hot water supply forward pipe 111 thereby flowing into the water heat exchanger 102 and, after the heat exchange, sequentially passes through the hot water supply return pipe 110 and the external hot water supply return pipe 412 thereby flowing into the mixing valve 401, to be mixed with water flowing through the external water supply branch pipe 413, and is then supplied to the hot water outlet 400.

### (Heat Storage Operation)

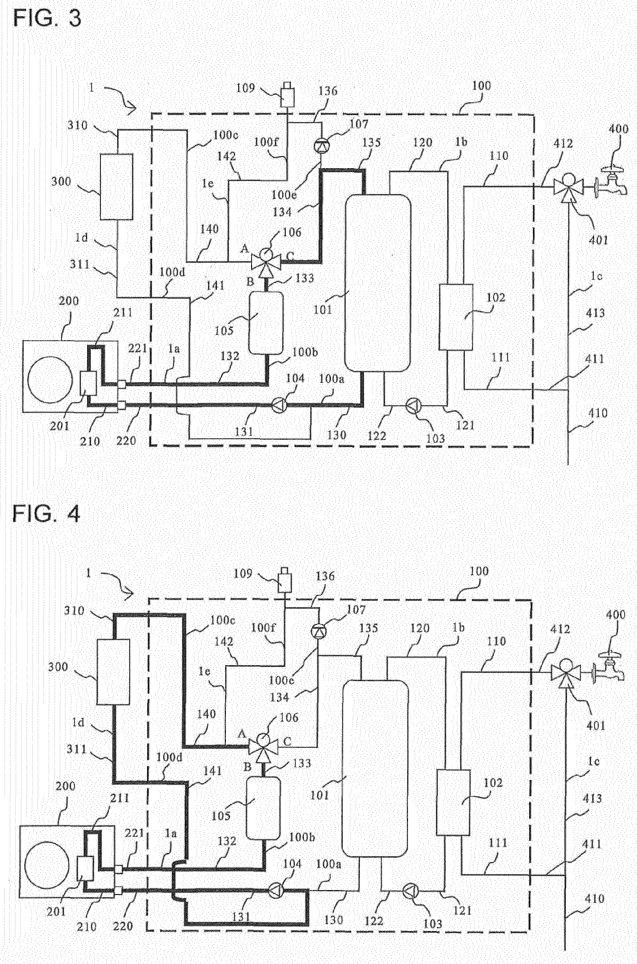

Fig. 3 is a schematic diagram for explaining the heat storage operation of the storage-type hot water supply system according to Embodiment 1 of the present invention. Referring to Fig. 3, in the heat storage operation the heat storage circuit circulation pump 104 is activated, and the B port (inlet) of the flow switching device 106 is set to communicate with the C port (first outlet). The fluid in the heat storage circuit 1a is heated by the heat source 201, and stored in the storage tank 101.

More specifically, the fluid stored in the storage tank 101 and flowing out of the lower portion thereof sequentially passes through the first HPU forward pipe 130, the second HPU forward pipe 131, the HPU external forward pipe 220, and the HPU internal forward pipe 210 thereby flowing into the heat source 201 and, after the heat exchange, sequentially passes through the HPU internal return pipe 211, the HPU external return pipe 221, and the first HPU return pipe 132, thereby flowing into the lower portion of the heater 105. The fluid further heated by the heater 105 sequentially passes through the second HPU return pipe 133, the flow switching device 106, the third HPU return pipe 134, and the fourth HPU return pipe 135, thereby returning to the upper portion of the storage tank 101.

In the mentioned process, gas such as air dissolved in the fluid heated by the heat source 201 flows into the air release mechanism 109 through the first vent pipe 136, located at an upper position than the storage tank 101 in the gravity direction, and is discharged out of the storage-type hot water supply system 1.

Here, the fluid circulating in the heat storage circuit 1a is to flow into the heat supply path 1d upon sequentially passing through the first vent pipe 136 and the second vent pipe 142. However, generally, pressure loss in a flow path including the heat supply forward pipe 140, the external heat supply forward pipe 310, the heat supply unit 300, the external heat supply return pipe 311, and the heat supply return pipe 141 and reaching the junction between the first HPU forward pipe 130 and heat supply return pipe 141, in other words the pressure loss in the heat supply path 1d is sufficiently larger than pressure loss in a flow path including the fourth HPU return pipe 135 and the storage tank 101 and reaching the junction between the first HPU forward pipe 130 and the heat supply return pipe 141, in other words the pressure loss in the flow path from the junction between the first return path 100b and the first vent path 100e to the junction between the first forward path 100a and the second return path 100d, through the storage tank 101. Therefore, the fluid circulating in the heat storage circuit 1a is prevented from flowing into the heat supply path 1d.

### (Heat Supply Operation)

Fig. 4 is a schematic diagram for explaining the heat supply operation of the storage-type hot water supply system according to Embodiment 1 of the present invention. Referring to Fig. 4, in the heat supply operation (e.g., heating operation of the heat supply unit 300) the heat storage circuit circulation pump 104 is in activation, and the B port (inlet) of the flow switching device 106 is set to communicate with the A port (second outlet). The fluid is heated by the heat source 201 and supplied to the heat supply unit 300.

More specifically, the fluid discharged from the heat storage circuit circulation pump 104 sequentially passes through the second HPU forward pipe 131, the HPU external forward pipe 220, and the HPU internal forward pipe 210 thereby flowing into the heat source (refrigerant heat exchanger) 201 and, after the heat exchange, sequentially passes through the HPU internal return pipe 211, the HPU external return pipe 221, and the first HPU return pipe 132 thereby flowing into the lower portion of the heater 105. The fluid further heated by the heater 105 sequentially passes through the second HPU return pipe 133, the flow switching device 106, the heat supply forward pipe 140, and the external heat supply forward pipe 310 thereby flowing into the heat supply unit 300 and, after radiating the heat, sequentially passes through the external heat supply return pipe 311 and the heat supply return pipe 141 thereby reaching the junction between the first HPU forward pipe 130 and the heat supply return pipe 141, and is then again sucked into the heat storage circuit circulation pump 104.

In the mentioned process, gas such as air dissolved in the fluid heated by the heat source 201 flows into the air release mechanism 109 through the second vent pipe 142, thus to be discharged out of the storage-type hot water supply system 1.

Here, although the fluid flowing through the heat supply path 1d is to flow into the storage tank 101 upon sequentially passing through the second vent pipe 142 and the first vent pipe 136, since the first check valve 107 is provided to the first vent pipe 136, the fluid flowing through the heat supply path 1d is restricted from flowing into the storage tank 101.

### < Advantages of Storage-Type Hot Water Supply System >

The storage-type hot water supply system according to Embodiment 1 provides the following advantageous effects. In the storage-type hot water supply system 1, the air release mechanism 109 is provided to the vent path 1e having one end portion communicating with the heat storage circuit 1a and the other end portion communicating with the heat supply path 1d. Accordingly, the number of air release mechanisms 109 can be reduced. In addition, the first check valve 107 that permits a flow the flow of the fluid directed toward the inlet of the air release mechanism 109 and prevent the reverse flow of the fluid is provided to the first vent path 100e. Such a configuration allows the gas such as air dissolved in the fluid to be discharged while suppressing the fluid in the heat storage circuit 1a and the fluid in the heat supply path 1d from being mixed with each other, when the pressure loss in the heat supply path 1d is larger, in the storage-type hot water supply system 1 configured not to supply the fluid to the storage tank 101 and to the heat supply unit 300 at the same time. Consequently, the circulation in the heat storage circuit 1a and the heat supply path 1d can be prevented from being disturbed owing to air entrainment in the heat storage circuit circulation pump 104.

Further, in the storage-type hot water supply system 1 the first check valve 107, which only permits the flow of the fluid directed upward from a lower side in the gravity direction and prevent the reverse flow of the fluid, is located at an upper position with respect to the storage tank 101 in the gravity direction. In addition, the inlet of the air release mechanism 109 is located at an upper position with respect to the first check valve 107 in the gravity direction. Such a configuration further assures that the gas such as air dissolved in the fluid circulating in the heat storage circuit 1a is discharged.

### Embodiment 2

Hereunder, a storage-type hot water supply system according to Embodiment 2 will be described. Description of the configurations and operations same as or similar to those of Embodiment 1 will be simplified or omitted, as the case may be.

### < Configuration of Storage-Type Hot Water Supply System >

A configuration of the storage-type hot water supply system according to Embodiment 2 will be described hereunder.

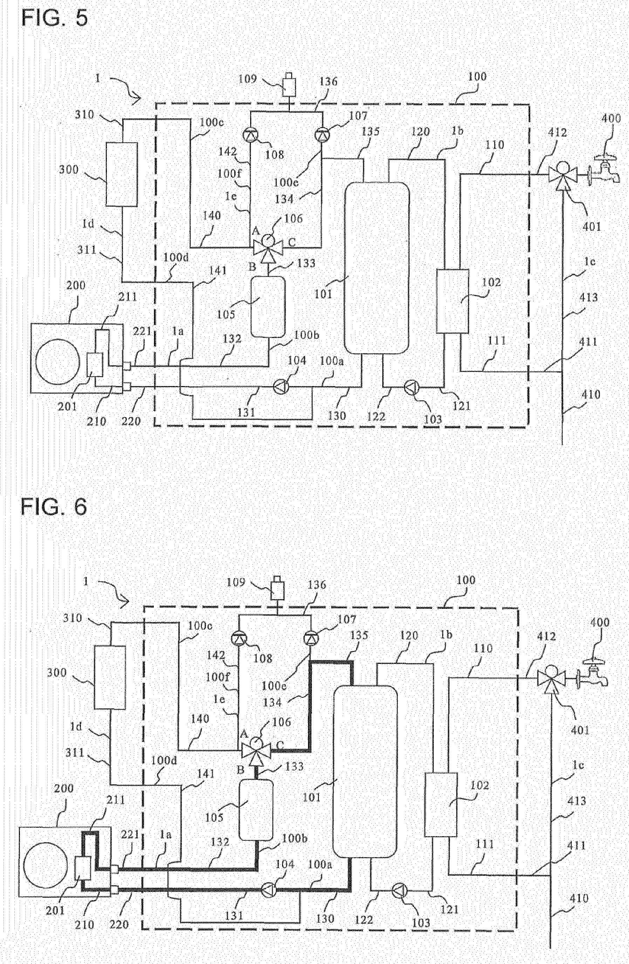

Fig. 5 is a schematic diagram for explaining the configuration of the storage-type hot water supply system according to Embodiment 2 of the present invention. Referring to Fig. 5, the A port (second outlet) of the flow switching device 106 and the inlet of the air release mechanism 109 are connected to each other via the second vent pipe 142. The second vent pipe 142 includes a second check valve 108. The second check valve 108 only permits a flow directed toward the inlet of the air release mechanism 109 from the A port (second outlet) of the flow switching device 106.

Thus, the storage-type hot water supply system 1 includes the first vent path 100e having one end portion communicating with a position between the flow switching device 106 in the first return path 100b and the storage tank 101, and the other end portion communicating with the inlet of the air release mechanism 109, and the second vent path 100f having one end portion communicating with the second forward path 100c and the other end portion communicating with the inlet of the air release mechanism 109. In other words, the vent path 1e, having one end portion communicating with the heat storage circuit 1a and the other end portion communicating with the heat supply path 1d, is formed.

The second vent pipe 142 extends upward from a lower side, in the gravity direction. Accordingly, the second check valve 108 only permits a flow directed upward from a lower side in the gravity direction. The second check valve 108 is located at an upper position with respect to the flow switching device 106 in the gravity direction. The inlet of the air release mechanism 109 is located at an upper position with respect to the second check valve 108.

### < Operation of Storage-Type Hot Water Supply System >

An operation of the storage-type hot water supply system according to Embodiment 2 will be described hereunder.

### (Heat Storage Operation)

Fig. 6 is a schematic diagram for explaining the heat storage operation of the storage-type hot water supply system according to Embodiment 2 of the present invention. Referring to Fig. 6, in the heat storage operation the heat storage circuit circulation pump 104 is activated, and the B port (inlet) of the flow switching device 106 is set to communicate with the C port (first outlet). The fluid in the heat storage circuit 1a is heated by the heat source 201, and stored in the storage tank 101.

In the mentioned process, gas such as air dissolved in the fluid heated by the heat source 201 flows into the air release mechanism 109 through the first vent pipe 136, located at an upper position than the storage tank 101 in the gravity direction, and is discharged out of the storage-type hot water supply system 1.

Here, the fluid circulating in the heat storage circuit 1a attempts to flow into the heat supply path 1d upon sequentially passing through the first vent pipe 136 and the second vent pipe 142. However, since the second check valve 108 is provided to the second vent pipe 142, the fluid circulating in the heat storage circuit 1a is restricted from flowing into the heat supply path 1d.

### (Heat Supply Operation)

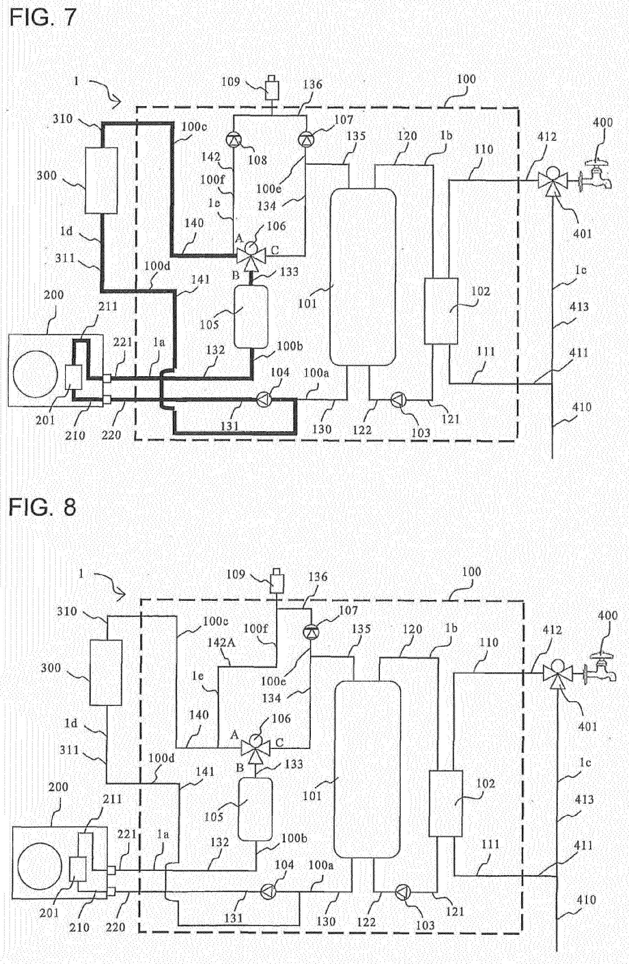

Fig. 7 is a schematic diagram for explaining the heat supply operation of the storage-type hot water supply system according to Embodiment 2 of the present invention. Referring to Fig. 7, in the heat supply operation (e.g., heating operation of the heat supply unit 300) the heat storage circuit circulation pump 104 is activated, and the B port (inlet) of the flow switching device 106 is set to communicate with the A port (second outlet). The fluid is heated by the heat source 201 and supplied to the heat supply unit 300.

In the mentioned process, gas such as air dissolved in the fluid heated by the heat source 201 flows into the air release mechanism 109 through the second vent pipe 142, and is discharged out of the storage-type hot water supply system 1.

Here, the fluid flowing through the heat supply path 1d attempts to flow into the storage tank 101 upon sequentially passing through the second vent pipe 142 and the first vent pipe 136. However, since the first check valve 107 is provided to the first vent pipe 136, the fluid flowing through the heat supply path 1d is restricted from flowing into the storage tank 101.

### < Effects of Storage-Type Hot Water Supply System >

The storage-type hot water supply system according to Embodiment 2 provides the following advantageous effects. In the storage-type hot water supply system 1, the second check valve 108 that only permits a flow directed toward the inlet of the air release mechanism 109 is provided to the second vent path 100f. Such a configuration allows the gas such as air dissolved in the fluid to be discharged while suppressing the fluid in the heat storage circuit 1a and the fluid in the heat supply path 1d from being mixed with each other, irrespective of whether the pressure loss in the heat supply path 1d is larger, in the storage-type hot water supply system 1 configured not to supply the fluid to the storage tank 101 and to the heat supply unit 300 at the same time. Consequently, the circulation in the heat storage circuit 1a and the heat supply path 1d can be prevented from being disturbed owing to air entrainment in the heat storage circuit circulation pump 104.

To be more detailed, even when the pressure loss in the heat supply path 1d is smaller than pressure loss in a flow path from the junction between the first return path 100b and the first vent path 100e to the junction between the first forward path 100a and the second return path 100d through the storage tank 101, for example even when the heat supply unit 300 is located close to the storage unit 100 and the heat supply forward pipe 140 and the external heat supply forward pipe 310 are very short, and hence a difference between the pressure loss in the heat supply forward pipe 140 and the external heat supply forward pipe 310 and the pressure loss in the third HPU return pipe 134 and the fourth HPU return pipe 135 is small, the gas such as air dissolved in the fluid can be discharged while the mixture of the fluid in the heat storage circuit 1a and the fluid in the heat supply path 1d is suppressed, and therefore the circulation in the heat storage circuit 1a and the heat supply path 1d can be prevented from being disturbed owing to air entrainment in the heat storage circuit circulation pump 104.

Further, in the storage-type hot water supply system 1 the second check valve 108, which only permits a flow directed upward from a lower side in the gravity direction, is located at an upper position with respect to the storage tank 101 in the gravity direction. In addition, the inlet of the air release mechanism 109 is located at an upper position with respect to the second check valve 108 in the gravity direction. Such a configuration further assures that the gas such as air dissolved in the fluid circulating in the heat supply path 1d is discharged.

### Embodiment 3

Hereunder, a storage-type hot water supply system according to Embodiment 3 will be described. Description of the configurations and operations same as or similar to those of Embodiments 1 and 2 will be simplified or omitted, as the case may be.

### < Configuration of Storage-Type Hot Water Supply System >

A configuration of the storage-type hot water supply system according to Embodiment 3 will be described hereunder.

Fig. 8 is a schematic diagram for explaining the configuration of the storage-type hot water supply system according to Embodiment 3 of the present invention. Referring to Fig. 8, the heat supply forward pipe 140 and the inlet of the air release mechanism 109 are connected to each other via a second vent pipe 142A. The pressure loss in the second vent pipe 142A is larger than pressure loss in a flow path including the fourth HPU return pipe 135 and the storage tank 101 and reaching the junction between the first HPU forward pipe 130 and the heat supply return pipe 141.

Thus, the storage-type hot water supply system 1 includes the first vent path 100e having one end portion communicating with a position between the flow switching device 106 in the first return path 100b and the storage tank 101, and the other end portion communicating with the inlet of the air release mechanism 109, and the second vent path 100f having one end portion communicating with the second forward path 100c and the other end portion communicating with the inlet of the air release mechanism 109. In other words, the vent path 1e, having one end portion communicating with the heat storage circuit 1a and the other end portion communicating with the heat supply path 1d, is formed.

### < Operation of Storage-Type Hot Water Supply System >

An operation of the storage-type hot water supply system according to Embodiment 3 will be described hereunder.

### (Heat Storage Operation)

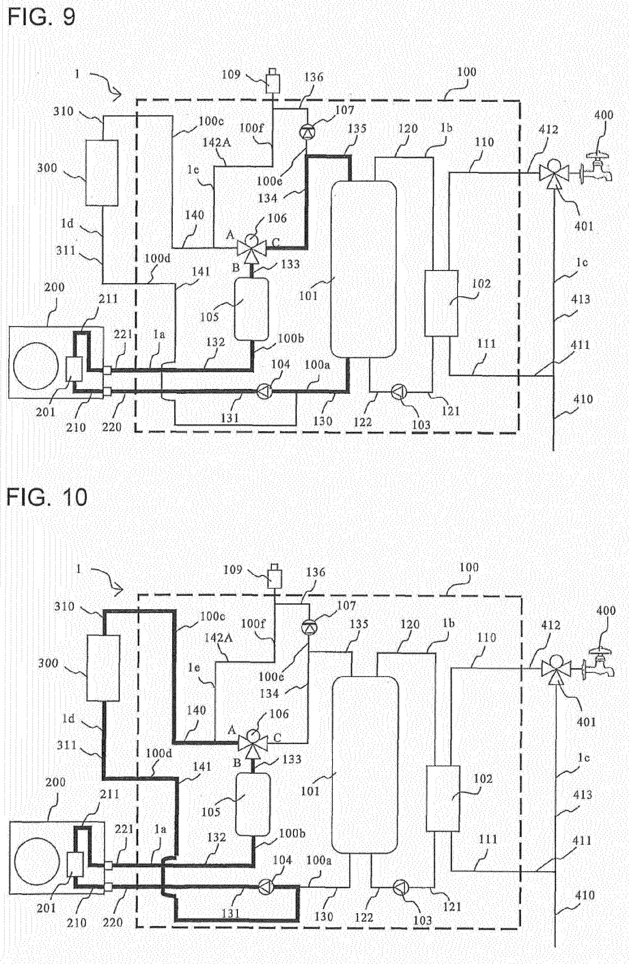

Fig. 9 is a schematic diagram for explaining the heat storage operation of the storage-type hot water supply system according to Embodiment 3 of the present invention. Referring to Fig. 9, in the heat storage operation the heat storage circuit circulation pump 104 is activated, and the B port (inlet) of the flow switching device 106 is set to communicate with the C port (first outlet). The fluid in the heat storage circuit 1a is heated by the heat source 201, and stored in the storage tank 101.

In the mentioned process, gas such as air dissolved in the fluid heated by the heat source 201 flows into the air release mechanism 109 through the first vent pipe 136, located at an upper position than the storage tank 101 in the gravity direction, and is discharged out of the storage-type hot water supply system 1.

Here, the fluid circulating in the heat storage circuit 1a attempts to flow into the heat supply path 1d upon sequentially passing through the first vent pipe 136 and the second vent pipe 142A. However, since the pressure loss in the second vent pipe 142A is larger than the pressure loss in the flow path including the fourth HPU return pipe 135 and the storage tank 101 and reaching the junction between the first HPU forward pipe 130 and the heat supply return pipe 141, the fluid circulating in the heat storage circuit 1a is restricted from flowing into the heat supply path 1d.

### (Heat Supply Operation)

Fig. 10 is a schematic diagram for explaining the heat supply operation of the storage-type hot water supply system according to Embodiment 3 of the present invention. Referring to Fig. 10, in the heat supply operation (e.g., heating operation of the heat supply unit 300) the heat storage circuit circulation pump 104 is activated, and the B port (inlet) of the flow switching device 106 is set to communicate with the A port (second outlet). The fluid is heated by the heat source 201 and supplied to the heat supply unit 300.

In the mentioned process, gas such as air dissolved in the fluid heated by the heat source 201 flows into the air release mechanism 109 through the second vent pipe 142A, and is discharged out of the storage-type hot water supply system 1.

Here, the fluid flowing through the heat supply path 1d attempts to flow into the storage tank 101 upon sequentially passing through the second vent pipe 142A and the first vent pipe 136. However, since the first check valve 107 is provided to the first vent pipe 136, the fluid flowing through the heat supply path 1d is restricted from flowing into the storage tank 101.

### < Effects of Storage-Type Hot Water Supply System >

The storage-type hot water supply system according to Embodiment 3 provides the following advantageous effects. In the storage-type hot water supply system 1, the pressure loss in the second vent path 100f is larger than the pressure loss in the flow path from the junction between the first return path 100b and the first vent path 100e to the junction between the first forward path 100a and the second return path 100d, through the storage tank 101. Such a configuration allows the gas such as air dissolved in the fluid to be discharged while suppressing the fluid in the heat storage circuit 1a and the fluid in the heat supply path 1d from being mixed with each other, irrespective of whether the pressure loss in the heat supply path 1d is larger, in the storage-type hot water supply system 1 configured not to supply the fluid to the storage tank 101 and to the heat supply unit 300 at the same time. Consequently, the circulation in the heat storage circuit 1a and the heat supply path 1d can be prevented from being disturbed owing to air entrainment in the heat storage circuit circulation pump 104.

### Embodiment 4

Hereunder, a storage-type hot water supply system according to Embodiment 4 will be described. Description of the configurations and operations same as or similar to those of Embodiments 1 to 3 will be simplified or omitted, as the case may be.

### < Configuration of Storage-Type Hot Water Supply System >

A configuration of the storage-type hot water supply system according to Embodiment 4 will be described hereunder.

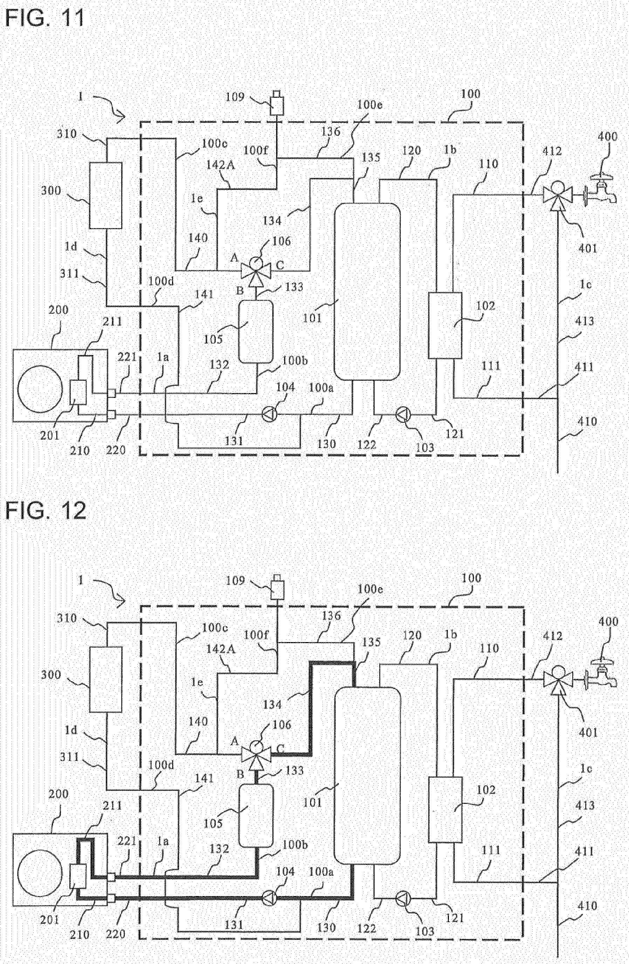

Fig. 11 is a schematic diagram for explaining the configuration of the storage-type hot water supply system according to Embodiment 4 of the present invention. Referring to Fig. 11, the heat supply forward pipe 140 and the inlet of the air release mechanism 109 are connected to each other via the second vent pipe 142A. The first vent pipe 136 is without the first check valve 107. The pressure loss in the second vent pipe 142A is larger than the pressure loss in the flow path including the fourth HPU return pipe 135 and the storage tank 101 and reaching the junction between the first HPU forward pipe 130 and the heat supply return pipe 141.

Thus, the storage-type hot water supply system 1 includes the first vent path 100e having one end portion communicating with a position between the flow switching device 106 in the first return path 100b and the storage tank 101, and the other end portion communicating with the inlet of the air release mechanism 109, and the second vent path 100f having one end portion communicating with the second forward path 100c and the other end portion communicating with the inlet of the air release mechanism 109. In other words, the vent path 1e, having one end portion communicating with the heat storage circuit 1a and the other end portion communicating with the heat supply path 1d, is formed.

### < Operation of Storage-Type Hot Water Supply System >

An operation of the storage-type hot water supply system according to Embodiment 4 will be described hereunder.

### (Heat Storage Operation)

Fig. 12 is a schematic diagram for explaining the heat storage operation of the storage-type hot water supply system according to Embodiment 4 of the present invention. Referring to Fig. 12, in the heat storage operation the heat storage circuit circulation pump 104 is activated, and the B port (inlet) of the flow switching device 106 is set to communicate with the C port (first outlet). The fluid in the heat storage circuit 1a is heated by the heat source 201, and stored in the storage tank 101.

In the mentioned process, gas such as air dissolved in the fluid heated by the heat source 201 flows into the air release mechanism 109 through the first vent pipe 136, located at an upper position than the storage tank 101 in the gravity direction, and is discharged out of the storage-type hot water supply system 1.

Here, the fluid circulating in the heat storage circuit 1a attempts to flow into the heat supply path 1d upon sequentially passing through the first vent pipe 136 and the second vent pipe 142A. However, since the pressure loss in the second vent pipe 142A is larger than the pressure loss in the flow path including the fourth HPU return pipe 135 and the storage tank 101 and reaching the junction between the first HPU forward pipe 130 and the heat supply return pipe 141, the fluid circulating in the heat storage circuit 1a is restricted from flowing into the heat supply path 1d.

### (Heat Supply Operation)

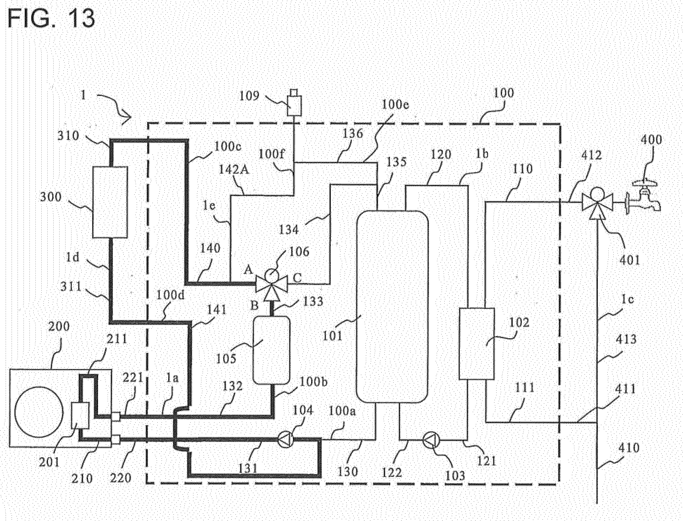

Fig. 13 is a schematic diagram for explaining the heat supply operation of the storage-type hot water supply system according to Embodiment 4 of the present invention. Referring to Fig. 13, in the heat supply operation (e.g., heating operation of the heat supply unit 300) the heat storage circuit circulation pump 104 is activated, and the B port (inlet) of the flow switching device 106 is set to communicate with the A port (second outlet). The fluid is heated by the heat source 201 and supplied to the heat supply unit 300.

In the mentioned process, gas such as air dissolved in the fluid heated by the heat source 201 flows into the air release mechanism 109 through the second vent pipe 142A, and is discharged out of the storage-type hot water supply system 1.

Here, the fluid flowing through the heat supply path 1d attempts to flow into the storage tank 101 upon sequentially passing through the second vent pipe 142A and the first vent pipe 136. However, when the pressure loss in the flow path including the heat supply forward pipe 140, the external heat supply forward pipe 310, the heat supply unit 300, the external heat supply return pipe 311, and the heat supply return pipe 141 and reaching the junction between the first HPU forward pipe 130 and the heat supply return pipe 141, in other words the pressure loss in the heat supply path 1d, is smaller than the pressure loss in the flow path including the second vent pipe 142A, the first vent pipe 136, the fourth HPU return pipe 135 and the storage tank 101 and reaching the junction between the first HPU forward pipe 130 and the heat supply return pipe 141, the fluid flowing through the heat supply path 1d is restricted from flowing into the storage tank 101.

### < Effects of Storage-Type Hot Water Supply System >

The storage-type hot water supply system according to Embodiment 4 provides the following advantageous effects. In the storage-type hot water supply system 1, the pressure loss in the second vent path 100f is larger than the pressure loss in the flow path from the junction between the first return path 100b and the first vent path 100e to the junction between the first forward path 100a and the second return path 100d, through the storage tank 101. Such a configuration allows the gas such as air dissolved in the fluid to be discharged while suppressing the fluid in the heat storage circuit 1a and the fluid in the heat supply path 1d from being mixed with each other, when the pressure loss in the heat supply path 1d is smaller, in the storage-type hot water supply system 1 configured not to supply the fluid to the storage tank 101 and to the heat supply unit 300 at the same time. Consequently, the circulation in the heat storage circuit 1a and the heat supply path 1d can be prevented from being disturbed owing to air entrainment in the heat storage circuit circulation pump 104. Further, the mentioned configuration allows the first check valve 107 and the second check valve 108 to be excluded, thereby reducing the number of parts, which contributes to reducing the parts cost of the storage-type hot water supply system 1.

Although Embodiment 1 to Embodiment 4 have been described as above, the present invention is in no way limited to the foregoing Embodiments. For example, a part or the whole of an Embodiment may be applied to another Embodiment.

### Reference Signs List

1: storage-type hot water supply system, 1a: heat storage circuit, 1b: indirect hot water supply circuit, 1c: hot water supply path, 1d: heat supply path, 1e: vent path, 100: storage unit, 100a: first forward path, 100b: first return path, 100c: second forward path, 100d: second return path, 100e: first vent path, 100f: second vent path, 101: storage tank, 102: water heat exchanger, 103: indirect hot water supply circuit circulation pump, 104: heat storage circuit circulation pump, 105: heater, 106: flow switching device, 107: first check valve, 108: second check valve, 109: air release mechanism, 110: hot water supply return pipe, 111: hot water supply forward pipe, 120: indirect hot water supply forward pipe, 121: first indirect hot water supply return pipe, 122: second indirect hot water supply return pipe, 130: first HPU forward pipe, 131: second HPU forward pipe, 132: first HPU return pipe, 133: second HPU return pipe, 134: third HPU return pipe, 135: fourth HPU return pipe, 136: first vent pipe, 140: heat supply forward pipe, 141: heat supply return pipe, 142, 142A: second vent pipe, 200: HPU, 201: heat source, 210: HPU internal forward pipe, 211: HPU internal return pipe, 220: HPU external forward pipe, 221: HPU external return pipe, 300: heat supply unit, 310: external heat supply forward pipe, 311: external heat supply return pipe, 400: hot water outlet, 401: mixing valve, 410: external water supply pipe, 411: external hot water supply forward pipe, 412: external hot water supply return pipe, 413: external water supply branch pipe

## Claims

1. A storage-type hot water supply system that heats fluid for use in supplying hot water and that supplies heat to a heat supply unit (300), the storage-type hot water supply system comprising:
a storage tank (101) configured to store the fluid;
a heat source (201) configured to heat the fluid;
a first forward path (100a) through which the fluid stored in the storage tank (101) is led to the heat source (201);
a first return path (100b) through which the fluid led to the heat source (201) is led to the storage tank (101);
a pump (104) provided in the first forward path (100a);
a flow switching device (106) provided in the first return path (100b);
a second forward path (100c) having one end portion communicating with the flow switching device (106) and an other end portion communicating with the heat supply unit (300);
a second return path (100d) having one end portion communicating with the heat supply unit (300) and an other end portion communicating with a point between the storage tank (101) and the pump (104); **characterized in** further comprising an air release mechanism (109) configured to discharge gas contained in the fluid flowing through the first return path (100b) and the second return path (100d);
a first vent path (100e) having one end portion communicating with a point between the flow switching device (106) and the storage tank (101), and an other end portion communicating with an inlet of the air release mechanism (109);
a second vent path (100f) having one end portion communicating with the second forward path (100c) and an other end portion communicating with the inlet of the air release mechanism (109); and
a first check valve (107) provided to the first vent path (100e) and configured to permit the fluid to flow toward the inlet of the air release mechanism (109) and prevent a reverse flow of the fluid.

2. The storage-type hot water supply system of claim 1,
wherein the first check valve (107) is located at an upper position than the storage tank (101), and at a lower position than the inlet of the air release mechanism (109).

3. The storage-type hot water supply system of claim 1 or 2, further comprising a second check valve (108) provided in the second vent path (100f) and configured to permit the fluid to flow toward the inlet of the air release mechanism (109) and prevent a reverse flow of the fluid,
wherein the second check valve (108) is located at a lower position than the inlet of the air release mechanism (109).

4. The storage-type hot water supply system of any one of claims 1 to 3,
wherein pressure loss in the second vent path (100f) is larger than pressure loss in a flow path from a junction between the first return path (100b) and the first vent path (100e) to a junction between the first forward path (100a) and the second return path (100d), through the storage tank (101).

## Patentansprüche

1. Warmwasser-Versorgungssystem vom Speichertyp, das Fluid zur Verwendung bei der Lieferung von Warmwasser erwärmt und das Wärme zu einer Wärmezuführungseinheit (300) liefert, welches Warmwasser-Versorgungssystem vom Speichertyp aufweist:
einen Speichertank (101), der zum Speichern des Fluids konfiguriert ist;
eine Wärmequelle (201), die zum Erwärmen des Fluids konfiguriert ist;
einen ersten Vorwärtspfad (100a), durch den das in dem Speichertank (101) gespeicherte Fluid zu der Wärmequelle (201) geführt wird;
einen ersten Rückkehrpfad (100b), durch den das zu der Wärmequelle (201) geführte Fluid zu dem Speichertank (101) geführt wird;
eine Pumpe (104), die in dem ersten Vorwärtspfad (100a) angeordnet ist;
eine Strömungsumschaltvorrichtung (106), die in dem ersten Rückkehrpfad (100b) angeordnet ist;
einen zweiten Vorwärtspfad (100c) mit einem Endbereich, der mit der Strömungsumschaltvorrichtung (106) kommuniziert, und einem anderen Endbereich, der mit der Wärmezuführungseinheit (300) kommuniziert;
einen zweiten Rückkehrpfad (100d) mit einem Endbereich, der mit der Wärmezuführungseinheit (300) kommuniziert, und einem anderen Endbereich, der mit einem Punkt zwischen dem Speichertank (101) und der Pumpe (104) kommuniziert;
**dadurch gekennzeichnet, dass** es weiterhin aufweist:
einen Luftfreigabemechanismus (109), der konfiguriert ist zum Ausgeben von in dem Fluid, das durch den ersten Rückkehrpfad (100b) und den zweiten Rückkehrpfad (100d) strömt, enthaltenem Gas;
einen ersten Entlüftungspfad (100e) mit einem Endbereich, der mit einem Punkt zwischen der Strömungsumschaltvorrichtung (106) und dem Speichertank (101) kommuniziert, und einem anderen Endbereich, der mit einem Einlass des Luftfreigabemechanismus (109) kommuniziert;
einen zweiten Entlüftungspfad (100f) mit einem Endbereich, der mit dem zweiten Vorwärtspfad (100c) kommuniziert, und einem anderen Endbereich, der mit dem Einlass des Luftfreigabemechanismus (109) kommuniziert; und
ein erstes Rückschlagventil (107), das in dem ersten Entlüftungspfad (100e) angeordnet und konfiguriert ist, dem Fluid zu ermöglichen, zu dem Einlass des Luftfreigabemechanismus (109) hin zu strömen, und eine umgekehrte Strömung des Fluids zu verhindern.

2. Warmwasser-Versorgungssystem vom Speichertyp nach Anspruch 1,
bei dem das erste Rückschlagventil (107) an einer höheren Position als der Speichertank (101) und an einer tieferen Position als der Einlass des Luftfreigabemechanismus (109) angeordnet ist.

3. Warmwasser-Versorgungssystem vom Speichertyp nach Anspruch 1 oder 2, weiterhin aufweisend ein zweites Rückschlagventil (108), das in dem zweiten Entlüftungspfad (100f) angeordnet und konfiguriert ist, eine Strömung des Fluids zu dem Einlass des Luftfreigabemechanismus (109) hin zu ermöglichen und eine umgekehrte Strömung des Fluids zu verhindern,
wobei das zweite Rückschlagventil (108) sich an einer tieferen Position als der Einlass des Luftfreigabemechanismus (109) befindet.

4. Warmwasser-Versorgungssystem vom Speichertyp nach einem der Ansprüche 1 bis 3,
bei dem ein Druckverlust in dem zweiten Entlüftungspfad (100f) größer ist als ein Druckverlust in einem Strömungspfad von einer Verbindung zwischen dem ersten Rückkehrpfad (100b) und dem ersten Entlüftungspfad (100e) zu einer Verbindung zwischen dem ersten Vorwärtspfad (100a) und dem zweiten Rückkehrpfad (100d) durch den Speichertank (101).

## Revendications

1. Système d'alimentation en eau chaude de type à stockage qui chauffe du fluide destiné à être utilisé pour fournir de l'eau chaude et qui fournit la chaleur à une unité d'alimentation thermique (300), le système d'alimentation en eau chaude de type à stockage comprenant :
un réservoir de stockage (101) configuré pour stocker le fluide ;
une source de chaleur (201) configurée pour chauffer le fluide ;
une première trajectoire aller (100a) à travers laquelle le fluide stocké dans le réservoir de stockage (101) est amené à la source de chaleur (201) ;
une première trajectoire retour (100b) à travers laquelle le fluide amené à la source de chaleur (201) est amené au réservoir de stockage (101) ;
une pompe (104) prévue dans la première trajectoire aller (100a) ;
un dispositif de commutation d'écoulement (106) prévu dans la première trajectoire retour (100b) ;
une seconde trajectoire aller (100c) ayant une partie d'extrémité communiquant avec le dispositif de commutation d'écoulement (106) et une autre partie d'extrémité communiquant avec l'unité d'alimentation thermique (300) ;
une seconde trajectoire retour (100d) ayant une partie d'extrémité communiquant avec l'unité d'alimentation thermique (300) et une autre partie d'extrémité communiquant avec un point entre le réservoir de stockage (101) et la pompe (104) ;
**caractérisé en ce qu'**il comprend en outre :
un mécanisme d'évacuation d'air (109) configuré pour évacuer le gaz contenu dans le fluide s'écoulant à travers la première trajectoire retour (100b) et la seconde trajectoire retour (100d) ;
une première trajectoire d'évent (100e) ayant une partie d'extrémité communiquant avec un point entre le dispositif de commutation d'écoulement (106) et le réservoir de stockage (101), et une autre partie d'extrémité communiquant avec une entrée du mécanisme d'évacuation d'air (109) ;
une seconde trajectoire d'évent (100f) ayant une partie d'extrémité communiquant avec la seconde trajectoire aller (100c) et une autre partie d'extrémité communiquant avec l'entrée du mécanisme d'évacuation d'air (109) ; et
une première valve de non-retour (107) prévue sur la première trajectoire d'évent (100e) et configurée pour permettre au fluide de s'écouler vers l'entrée du mécanisme d'évacuation d'air (109) et empêcher un écoulement en sens inverse du fluide.

2. Système d'alimentation en eau chaude de type à stockage selon la revendication 1,
dans lequel la première valve de non-retour (107) est positionnée dans une position supérieure par rapport au réservoir de stockage (101), et dans une position inférieure par rapport à l'entrée du mécanisme d'évacuation d'air (109).

3. Système d'alimentation en eau chaude de type à stockage selon la revendication 1 ou 2, comprenant en outre une seconde valve de non-retour (108) prévue dans la seconde trajectoire d'évent (100f) et configurée pour permettre au fluide de s'écouler vers l'entrée du mécanisme d'évacuation d'air (109) et empêcher un écoulement en sens inverse du fluide,
dans lequel la seconde valve de non-retour (108) est positionnée dans une position inférieure par rapport à l'entrée du mécanisme de libération d'air (109).

4. Système d'alimentation en eau chaude de type à stockage selon l'une quelconque des revendications 1 à 3,
dans lequel la perte de pression dans la seconde trajectoire d'évent (100f) est supérieure à la perte de pression dans une trajectoire d'écoulement à partir d'une jonction entre la première trajectoire retour (100b) et la première trajectoire d'évent (100e) jusqu'à une jonction entre la première trajectoire aller (100a) et la seconde trajectoire retour (100d), par le biais du réservoir de stockage (101).
